Europäisches Patentamt

European Patent Office

Office européen des brevets

Veröffentlichungsnummer: **0 278 101**
**A1**

## EUROPÄISCHE PATENTANMELDUNG

Anmeldenummer: 87118989.0

Anmeldetag: **21.12.87**

Int. Cl.⁴ **A01D 80/02** , A01B 23/02

Priorität: **10.02.87 DE 3704082**

Veröffentlichungstag der Anmeldung:
**17.08.88 Patentblatt 88/33**

Benannte Vertragsstaaten:
**AT CH DE FR IT LI NL**

Anmelder: **Klöckner-Humboldt-Deutz
Aktiengesellschaft
Deutz-Mülheimer-Strasse 111 Postfach 80 05
09
D-5000 Köln 80(DE)**

Erfinder: **Wessel, Ulrich
Hilzingerstrasse 33
D-7702 Gottmadingen(DE)**

Heuwerbungsmaschine.

Die Erfindung betrifft eine Heuwerbungsmaschine mit mindestens einem drehbaren Kreisel, der mehrere Tragarme (1) aufweist, an denen jeweils eine Vielzahl elastischer Doppelfederzinken (2) angeordnet ist, deren U-förmig abgebogenes Mittelstück (11) den Tragarm (1) an drei Seiten umgreift und über ein Klemmteil (5) und einen Spannbolzen (7) mit ihm verbunden ist.

Das Klemmteil (5) weist zwei parallel verlaufende Aussparungen (10, 10') auf, wobei die am Klemmteil (5) anliegenden Abschnitte (4, 4') des Doppelfederzinkens (2) teilweise in diese Aussparungen (10, 10') eingreifen.

FIG.1

FIG.2

EP 0 278 101 A1

## Heuwerbungsmaschine

Die Erfindung betrifft eine Heuwerbungsmaschine mit mindestens einem drehbaren Kreisel, der mehrere Tragarme aufweist, an denen jeweils eine Vielzahl elastischer Doppelfederzinken angeordnet ist, deren U-förmig abgebogenes Mittelstück den Tragarm an drei Seiten umgreift und über einen Klemmteil und einem Spannbolzen mit ihm verbunden ist.

Die üblicherweise an den Tragarmen derartiger Heuwerbungsmaschinen auswechselbar befestigten Zinken sind meistens Doppelfederstahlzinken, wobei jeder Zinken einen Federwickel aufweist. Der Federwickel gewährleistet eine bestimmte Elastizität der Zinkenschenkel um deren Biegebeanspruchung zu verringern, z.B. beim Auftreffen auf ein festes Hindernis; um eine Mindestfestigkeit des Doppelfederzinkens zu gewährleisten und um die Bruchgefahr herabzusetzen, kann jeder Zinken mit mehreren Federwickeln versehen sein.

Die Doppelfederzinken werden im allgemeinen entweder reibschlüssig oder formschlüssig an den Tragarmen befestigt. Die reibschlüssige Verbindung hat den Nachteil, daß die Halbbarkeit sehr stark von der Oberflächenbeschaffenheit abhängig ist , wohingegen sie den Vorteil aufweist, daß die Herstellungstoleranzen durch Setzen der Federwickel sowie bleibende Verformungen durch Nachstellen korrigiert werden können.

Die formschlüssige Befestigung der Doppelfederzinken ermöglicht eine sichere Verbindung zwischen Zinken und Tragarm, weist aber noch den Nachteil auf, daß der Winkel der Zinkenschenkel nicht optimal eingestellt werden kann, wodurch die Funktion des Gerätes beeinträchtigt wird.

Aus dem DE-GM 19 63 185 ist eine Heuerntemaschine bekannt, mit Tragarmen rechteckigen Querschnittes, an denen im wesentlichen U-förmig gebogene Doppelfederzinken derart befestigt sind, daß das den U-Bogen bildende Ende in einer zur Ebene des U-Bogens senkrecht liegenden Ebene gekrümmt ist und wobei die Schenkel des gekrümmten Zinkenmittelstücks mit etwa der Hälfte ihres Querschnitts in der Krümmung des Zinkenmittelstücks entsprechenden Vertiefungen des Tragarmes liegen und mit diesem durch eine Befestigungsschraube verspannbar sind, die zwischen den beiden Schenkeln angeordnet ist und sowohl den Tragarm als auch ein an der dem Tragarm gegenüberliegenden Seite des Zinkenmittelstücks anliegendes Druckstück durchsetzt.

Bei dieser bekannten Heuerntemaschine kann die Befestigung des Doppelfederzinkens am Tragarm , d.h. die Stellung des Zinkens gegenüber dem Boden dadurch verändert werden, daß nach Lösen der Befestigungsschraube ein anderes Druckstück eingebaut wird, so daß die Stellung des Doppelfederzinkens gegenüber dem Boden verändert wird.

Trifft nun der Zinken auf ein Hindernis, z.B. eine Bodenunebenheit, so entsteht infolge dieser Belastung ein Moment, das bestrebt ist den Zinken samt seiner Federwickel um eine etwa konzentrisch zu den Federwickeln liegende Achse zu verdrehen. Dies bedeutet, daß der Zinken seinen ursprünglich eingestellte Position dann nicht beibehalten kann, wenn sich z.B. die Befestigungsschraube geringfügig gelöst hat.

Aus der DE-AS 11 86 256 ist ein Heuwender bekannt mit einer angetriebenen Rechtrommel entlang deren Umfang federnde Einfachzinken derart befestigt sind, daß sie sowohl in der Vertikalebene als auch in der Querebene um Winkelbeträge in der Größenordnung von 15° ausgelenkt werden können um in beiden Richtungen durch Rückstellmomente in ihre Ruhelage zurückgeführt zu werden. Dabei wird das Befestigungsende der Zinken zwischen mindestens zwei auf Druck vorgespannten Platten aus Gummi oder gummiähnlichem Kunststoff reibschlüssig eingespannt, wobei das Befestigungsende der Zinken winklig oder zu einer Öse verformt wird und zwischen den vorgespannten Gummiplatten und der Öse der Zinken starre z.B. aus Metall bestehende und mit Nuten zur Aufnahme der Zinkenöse versehene Druckscheiben vorgesehen sind zwischen denen die vorgespannten Gummiplatten mit ihren den starren Druckscheiben abgekehrten Stirnflächen an Stützelementen anliegen, deren gegenseitiger Absand mittels einer die Gummiplatten und die Druckscheiben durchdringenden Zugschraube änderbar ist.

Eine derartige Lagerung von Zinken ist aufwendig und damit teuer in der Herstellung und eignet sich nicht für die Befestigung von Doppelfederzinken an Tragarmen.

Aufgabe der vorliegenden Erfindung ist es, eine Heuwerbungsmaschine zu schaffen, an deren Tragarmen die Doppelfederzinken derart befestigt sind, daß sie eine erheblich höhere Lebensdauer aufweisen, d.h. eine erheblich größere Wechselbiegezahl bis zum Bruch des Zinkens aushalten bei gleichzeitiger Vereinfachung und damit Verbilligung des Herstellungsaufwandes.

Ausgehend von einer Heuwerbungsmaschine der eingangs näher genannten Art wird zur Lösung dieser Aufgabe vorgeschlagen, daß das Klemmteil zwei parallel zueinander verlaufende Aussparungen aufweist, die so angeordnet sind, daß die im Klemmteil anliegenden Abschnitte des Doppelfederzinkens teilweise in diese Aussparungen eingreifen.

Vorteilhafterweise sind die Aussparungen Nuten mit rechteckigem Querschnitt, wobei die Nutbreite kleiner als der Durchmesser der aus Rundstab bestehenden Abschnitte des Doppelfederzinkens ist.

Bei einem bevorzugten Ausführungsbeispiel ist der sich von der Aufnahmebohrung für den Spannbolzen nach unten in Richtung des freien Endes der Federzinken erstreckende Abschnitt des Klemmteils länger als der sich von der Aufnahmebohrung nach oben in Richtung des Mittelstücks der Federzinken erstreckende Abschnitt, wobei der am Federzinken anliegende Rand des längeren unteren Abschnitts des Klemmteils abgerundet sein kann.

Da es sich bei der Befestigung eines Doppelfederzinkens mit einem Tragarm um eine Verbindung zwischen einem starren und einem schwingenden Teil handelt, muß sichergestellt sein, daß die Federzinken in den Richtungen, in denen sie beansprucht werden, möglichst frei ausschwingen können. Dies bedeutet, daß die Einspannstelle möglichst im Gebiet des niedrigsten Biegemoments liegt und daß scharfe Kanten zwischen Federzinken und der Befestigung die zu Beanspruchungsspitzen führen können, vermieden werden.

Gerade diese Vorteile werden mit der erfindungsgemäßen Heuwerbungsmaschine erzielt. Dadurch, daß entlang der am Klemmstück anliegenden Abschnitte der Doppelfederzinken rechteckige Nuten im Klemmstück vorgesehen sind, liegt der aus Rundstab bestehende Abschnitt des Federzinkens nicht mit der Zone der höchstens Druckspannung am Klemmstück an, so daß in diesem Bereich keine Reibung entsteht und damit die Wechselbiegezahlen bis zum Bruch des Zinkens wesentlich erhöht werden. Erst entlang der Ränder der Nut tritt die Druckspannung am Abschnitt der Doppelfederzinken infolge der Verspannung auf. Dadurch und durch den verlängerten unteren abgerundeten Abschnitt des Klemmstücks greifen das Druckmaximum der Biegespannung und die Druckbeanspruchung der Verspannung nicht mehr an der gleichen Stelle an, wodurch die Druckbeanspruchung des Doppelfederzinkens insgesamt erheblich geringer ist und damit seine Lebensdauer verlängert.

Im folgenden wird die Erfindung anhand der Zeichnung näher erläutert, in der ein vorteilhaftes Ausführungsbeispiel dargestellt ist. Es zeigen:

Figur 1 einen Schnitt durch einen Tragarm und eine Seitenansicht auf einen an ihm befestigten Doppelfederzinken und

Figur 2 eine Ansicht entlang der Linie A-A von Figur 1.

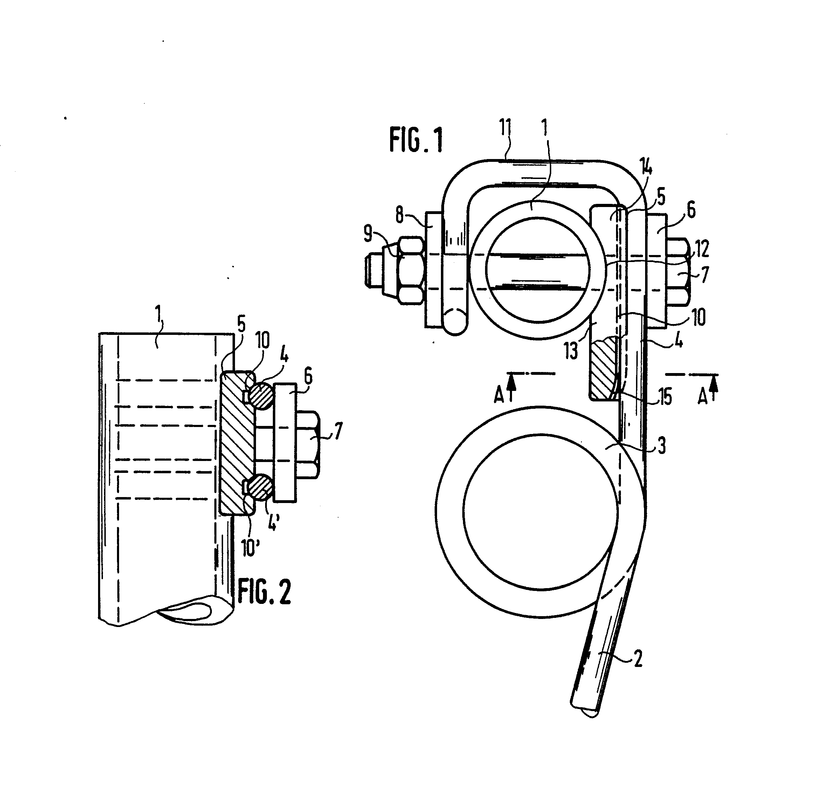

In den Figuren ist mit 1 eines von mehreren zylindrischen Tragarmen einer Heuwerbungsmaschine bezeichnet, an dem jeweils eine Vielzahl von nebeneinander angeordneten Doppelfederzinken befestigt sind. Jeder Doppelfederzinken besteht aus zwei parallel zueinander angeordneten freien Zinkenenden 2, (von denen in Figur 1 nur einer dargestellt ist) einem sich daran anschließenden aus einem oder mehreren Windungen bestehenden Federwickel, einem sich daran anschließenden geraden Abschnitt 4, 4' und einem die beiden Abschnitte 4, 4' miteinander verbindenen Mittelstück 11, das im wesentlichen U-förmig abgebogen ist und den Tragarm an drei Seiten umschließt.

Zwischen den Abschnitten 4, 4' des Doppelfederzinkens und dem Tragarm 1 ist erfindungsgemäß ein Klemmstück 5 vorgesehen, dessen am Tragarm 1 anliegender Bereich eine zylindrische Aussparung 12 aufweist, die an die Außenabmessung des Tragarms 1 angepaßt ist. Ferner weist das Klemmstück 5 zwei parallel zueinander verlaufende Aussparungen 10, 10' auf in Form von rechteckigen Nuten, die an denjenigen Stellen vorgesehen sind, an denen der gerade Abschnitt 4, 4' des Doppelfederzinkens am Klemmstück 5 anliegt. Mit 7 ist ein Spannbolzen bezeichnet und mit 6 ein Zwischenring, wobei der Spannbolzen zwischen den beiden geraden Abschnitten 4, 4' eine im Klemmstück 5 vorgesehene Aufnahmebohrung durchsetzt sowie eine entsprechende Aufnahmebohrung im Tragarm 1; am anderen Ende des Spannbolzens 7 ist eine Druckplatte 8 vorgesehen, die von einer Mutter 9 beaufschlagt wird und das Mittelstück 11 fest mit dem Tragarm 1 und dem Klemmstück verbindet.

Der sich von der Aufnahmebohrung für den Spannbolzen 7 nach unten in Richtung des freien Endes der Federzinken 2 erstreckende Abschnitt 13 des Klemmteils 5 ist dabei länger als der sich von der Aufnahmebohrung nach oben in Richtung des Mittelstücks 11 des Federzinkens erstreckende Abschnitt 14, wobei der untere am geraden Abschnitt 4, 4' des Doppelfederzinkens anliegende Rand 15 des längeren Abschnitts 13 abgerundet ist. Damit erhält man einen weichen Übergang am untersten Anlagepunkt der Abschnitte 4, 4' zum Klemmstück 5.

Erfindungsgemäß greifen die geraden Abschnitte 4, 4' teilweise in die parallel dazu angeordneten Nuten 10, 10' im Klemmstück 5 ein, so daß die aus Rundstab bestehenden Abschnitte des Doppelfederzinkens nicht mit der Zone der höchsten Druckspannung am Klemmteil anliegen. In diesem Bereich ist demzufolge die Reibung erheblich vermindert, wodurch die Wechselbiegezahlen bis zu einem Bruch des Zinkens wesentlich erhöht werden und damit die Lebensdauer des Zinkens.

Die vom Spannbolzen 12 und der Mutter 9 herrührende Druckspannung tritt demzufolge außerhalb der Nuten 10. 10' auf . wodurch das Druckmaximum der Biegespannung und die Druckbeanspruchung der Verschraubung nicht mehr an der gleichen Stelle den Doppelfederzinken beaufschlagen.

## Ansprüche

1. Heuwerbungsmaschine, mit mindestens einem drehbaren Kreisel, der mehrere Tragarme aufweist, an denen jeweils eine Vielzahl elastischer Doppelfederzinken angeordnet ist, deren U-förmig abgebogenes Mittelstück den Tragarm an drei Seiten umgreift und über ein Klemmteil und einen Spannbolzen mit ihm verbunden ist, dadurch gekennzeichnet, daß das Klemmteil (5) zwei parallel zueinander verlaufende Aussparungen (10, 10') aufweist, die so angeordnet sind, daß die am Klemmteil anliegenden Abschnitte (4, 4') des Doppelfederzinkens teilweise in diese Aussparungen eingreifen.

2. Heuwerbungsmaschine nach Anspruch 1, dadurch gekennzeichnet, daß die Aussparungen Nuten sind, die einen rechteckigen Querschnitt aufweisen und daß die Nutbreite kleiner als der Durchmesser der aus Rundstab bestehenden Abschnitte (4, 4') des Doppelfederzinkens ist.

3. Heuwerbungsmaschine nach einem der vorhergehenden Ansprüche, dadurch gekennzeichnet, daß der sich von der Aufnahmebohrung für den Spannbolzen (7) nach unten in Richtung des freien Endes der Federzinken erstreckende Abschnitt (13) des Klemmteils (5) länger ist als der sich von der Aufnahmebohrung nach oben in Richtung des Mittelstücks (11) des Federzinkens erstreckende Abschnitt (14) ist.

4. Heuwerbungsmaschine nach einem der vorhergehenden Ansprüche, dadurch gekennzeichnet, daß der am Federzinken anliegende Rand (15) des längeren unteren Abschnitts (13) des Klemmteils (5) abegrundet ist.

FIG.1

FIG.2

| | EINSCHLÄGIGE DOKUMENTE | | EP 87118989.0 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | AT - B - 192 170 (MASCHINENFABRIK UND EISENGIESSEREI ALOIS PÖTTINGER) <br> * Gesamt * <br> -- | 1 | A 01 D 80/02 <br> A 01 B 23/02 |
| D,X | DE - B - 1 186 256 (CONTINENTAL GUMMIWERKE AG) <br> * Gesamt * <br> -- | 1 | |
| A | EP - A2 - 0 097 801 (KLÖCKNER-HUMBOLDT-DEUTZ AG) <br> -- | | |
| A | CH - A - 341 021 (MASCHINENFABRIK FAHR AG) <br> ---- | | |
| | | | **RECHERCHIERTE SACHGEBIETE (Int. Cl.4)** <br><br> A 01 D 80/00 <br> A 01 D 87/00 <br> A 01 B 23/00 |

Der vorliegende Recherchenbericht wurde für alle Patentansprüche erstellt.

| Recherchenort | Abschlußdatum der Recherche | Prüfer |
|---|---|---|
| WIEN | 13-04-1988 | SCHNEEMANN |

BAD ORIGINAL